Europäisches Patentamt

European Patent Office

Office européen des brevets

(11) Numéro de publication: **0 482 994 B1**

# FASCICULE DE BREVET EUROPEEN

(45) Date de publication de fascicule du brevet: **07.06.95**   (51) Int. Cl.⁶: **C04B 41/89**, D01F 11/14

(21) Numéro de dépôt: **91402812.1**

(22) Date de dépôt: **22.10.91**

(54) **Pièce en matériau composite carboné, protégée contre l'oxydation et son procédé de fabrication.**

(30) Priorité: **24.10.90 FR 9013175**

(43) Date de publication de la demande:
**29.04.92 Bulletin  92/18**

(45) Mention de la délivrance du brevet:
**07.06.95 Bulletin  95/23**

(84) Etats contractants désignés:
**AT BE CH DE DK ES FR GB GR IT LI LU NL SE**

(56) Documents cités:
EP-A- 0 282 386      EP-A- 0 359 614
EP-A- 0 359 614      US-A- 4 500 602
US-A- 4 671 997      US-A- 4 751 258

(73) Titulaire: **AEROSPATIALE Société Nationale Industrielle**
**37, Boulevard de Montmorency**
**F-75781 Paris Cédex 16 (FR)**

(72) Inventeur: **Lequertier, Jean-Michel**
**31 Villepreux Hameau**
**F-33160 Saint Aubin du Médoc (FR)**

(74) Mandataire: **Poulin, Gérard et al**
**Société de Protection des Inventions**
**25, rue de Ponthieu**
**F-75008 Paris (FR)**

Rank Xerox (UK) Business Services
(3.10/3.09/3.3.3)

## Description

La présente invention se rapporte à une pièce en matériau composite carboné, rendue inoxydable jusqu'à une température de 2000°C, pendant de longues durées (plusieurs centaines d'heures) ainsi qu'à son procédé de fabrication.

Les pièces en matériau composite carboné peuvent être utilisées dans de nombreux secteurs industriels et notamment dans le domaine spatial du fait de leur faible poids pour la fabrication de véhicules spatiaux réutilisables (navette ou aéronef). Ces pièces doivent résister aux échauffements provoqués par le frottement de l'air lors de la rentrée des véhicules spatiaux à grande vitesse dans l'atmosphère.

Ces véhicules spatiaux sont en particulier ceux dont les missions de rentrée entraînent en des points singuliers plus sollicités que d'autres tels que le nez, les ailerons et les bords d'attaque, des expositions à des températures élevées (1800°C sous une pression d'air de 0,1 à 10kPa) ou entraînent l'exposition de certaines pièces à des températures variables (1000°C à 1800°C).

Toutefois, l'invention s'applique aussi dans d'autres secteurs industriels nécessitant l'utilisation de pièces en matériau réfractaire gardant de bonnes propriétés mécaniques au-dessus de 1100°C en milieu corrosif. Ceci est en particulier le cas des moteurs de turbine à rendement amélioré travaillant à haute température (1300 à 1400°C) et de certains récupérateurs de chaleur industriels.

Les matériaux carbonés protégés contre l'oxydation auxquels s'applique l'invention sont des matériaux composites constitués de fibres carbonées noyées dans une matrice carbonée et en particulier des matériaux du type carbone-carbone.

Le problème majeur des matériaux composites du type carbone-carbone est leur oxydation dans l'air à haute température entraînant la transformation du carbone en oxyde de carbone et donc une dégradation au cours du temps des matériaux composites.

Pour éviter cette oxydation, différents procédés ont déjà été envisagés concernant la protection de ces matériaux, basée sur l'utilisation d'un revêtement de carbure de silicium formé à la surface externe des pièces en matériaux composites.

Ce revêtement externe de SiC peut être réalisé par dépôt chimique en phase vapeur (DCPV) par craquage de chlorosilane seul ou associé à de l'hydrogène et/ou à des hydrocarbures ou être obtenu par siliciuration du carbone de surface du matériau composite. Ces deux techniques de dépôt sont décrites en particulier dans le document FR-A-2 611 198 déposé au nom du demandeur.

La siliciuration superficielle est réalisée par "PACK-cementation" en immergeant la pièce à siliciurée dans un mélange de poudres qui dégage par chauffage des vapeurs d'espèces siliciurantes telles que le silicium ou le monoxyde de silicium.

D'autres techniques associent la siliciuration du carbone superficiel de la pièce à un dépôt chimique en phase vapeur (voir à cet effet les brevets US-A-3 406 044, US-A-4 425 407 et US-A-4 476 178).

Toutes ces techniques de fabrication d'une couche de SiC sur les matériaux composites du type carbone-carbone conduisent à l'obtention d'une couche fissurée du fait de l'écart des coefficients de dilatation thermique entre le matériau carboné et le carbure de silicium. Pour remédier à cet inconvénient différents matériaux de colmatage ont été envisagés (voir à cet effet les documents FR-A-2 611 198 et FR-A-2 635 773).

De plus, les techniques de dépôt de SiC par DCPV conduisent à un revêtement externe d'adhérence relativement médiocre pouvant conduire au décollement de ce revêtement dans les conditions normales d'utilisation des pièces protégées par ce revêtement, ce qui n'est pas le cas pour un revêtement externe obtenu par siliciuration.

Par ailleurs, lors de l'élaboration de ce matériau carboné, il se crée des microfissures au sein dudit matériau.

L'invention a justement pour objet un procédé de fabrication d'une pièce en matériau composite carboné, dont la protection contre l'oxydation est améliorée par rapport à celle de l'art antérieur ; cette pièce est susceptible de supporter des températures très élevées sous des pressions réduites.

En vue d'améliorer la résistance à l'oxydation des pièces en matériau composite carboné, le demandeur a envisagé de gérer les fissures du revêtement externe en leur imposant des directions privilégiées, par rapport aux directions principales du matériau composite sous-jacent.

Le problème de fissures du revêtement de SiC apparaissant pour toute céramique de coefficient de dilatation thermique plus élevé que celui du matériau carboné, l'invention s'applique à toutes les céramiques déposées directement sur un matériau carboné.

Selon l'invention, le procédé de fabrication d'une pièce en matériau composite carboné, protégée contre l'oxydation, consiste à :

(a) - former une préforme fibreuse de la pièce en superposant des nappes de fibres carbonées, les fibres de chaque nappe étant parallèles entre elles et les N nappes les plus externes de cette superposition, avec N entier ≧2, étant agencées de sorte que leurs fibres soient orientées uniquement selon une première ou une seconde direction (x, y), la première et la seconde directions étant perpendiculaires entre elles et contenues dans un même plan,

(b) - densifier la préforme par un matériau carboné de densification,

(c) - former un revêtement externe de carbure ou de carbonitrure réfractaire stable à la surface de la préforme densifiée pour assurer une protection contre l'oxydation du matériau et des fibres carbonés sous-jacents, ce revêtement étant formé en faisant réagir chimiquement, à une température supérieure à la température ambiante, les N-1 nappes densifiées les plus externes de la préforme densifiée avec au moins un composé chimique précurseur dudit carbure ou carbonitrure,

(d) - laisser refroidir l'ensemble obtenu en (c) pour former dans le revêtement externe des fissures dans le sens de l'épaisseur du revêtement et débouchant vers l'extérieur de la pièce, ces fissures étant orientées selon les première et seconde directions et définissant entre elles des pavés parallélépipédiques dudit carbure ou carbonitrure, et

(e) - colmater les fissures.

Par fibres carbonées, on entend des fibres de carbone ou des fibres de carbure de silicium ou de carbonitrure de silicium (SiCN) ou encore des fibres de carbone recouvertes d'une couche de carbure ou de carbonitrure de silicium. On préfère utiliser des fibres de carbone, éventuellement recouvertes d'une couche de SiC.

Le matériau de densification qui constitue la matrice de la pièce doit être capable de réagir chimiquement pour former un carbure ou un carbonitrure. Aussi, on utilise comme matrice carbonée, une matrice de carbone pur ou une matrice de carbone dopé notamment avec un ralentisseur d'oxydation tel que du carbure de silicium, du bore, du siliciure de bore ou du nitrure de bore. Dans le cas d'une matrice dopée, cette dernière contient, généralement, au plus 20% en poids de ralentisseur d'oxydation et de préférence de 2 à 10% en poids.

Le nombre de nappes de fibres à transformer chimiquement en carbure ou carbonitrure réfractaire dépend de l'application envisagée et de l'épaisseur totale de la pièce. Pour une bonne résistance mécanique de la pièce, l'épaisseur du revêtement externe $e$ doit être inférieure à l'épaisseur de la partie carbonée. En particulier, $e$ satisfait de préférence à la relation $e/E \leq 1/6$ où $E$ représente l'épaisseur totale de la pièce. Cette condition étant respectée, le nombre de nappes transformées est en général égal à 1, 2, 3 ou 4. En effet, la partie carbonée de la pièce assure la tenue mécanique du matériau composite alors que le revêtement externe joue le rôle de protection anti-oxydation.

Comme revêtement externe utilisable dans l'invention, on peut citer le carbure de silicium, de titane, de molybdène, de tantale, de niobium, de tungstène, de vanadium, d'aluminium, de bore ou encore le carbonitrure de bore qui est une solution solide à environ 30% en atome respectivement de bore, de carbone et d'azote.

La "carburation" ou la "carbonitruration" est réalisée en particulier en immergeant la préforme densifiée dans un mélange de poudres qui dégage par chauffage les vapeurs du composé apte à réagir chimiquement avec le carbone.

Pour la "carburation", les vapeurs sont en général celles du métal du carbure et/ou de l'oxyde de ce métal.

Pour une siliciuration, les vapeurs des espèces siliciurantes sont le silicium et/ou le monoxyde de silicium. Pour former le carbure de tantale TaC, on utilise les vapeurs de tantale et/ou de $Ta_2O_5$, etc...

Pour la "carbonitruration" on utilise des vapeurs d'ammoniac et d'halogénure de bore comme réactif.

Les mélanges de poudres utilisables pour fournir les espèces siliciurantes sont généralement constitués de carbure de silicium et d'au moins un oxyde quelconque apte à réagir avec le carbure de silicium pour fournir du monoxyde de silicium. L'oxyde utilisé est en particulier la silice ou l'alumine.

Avec un mélange de $SiC + SiO_2$, on forme essentiellement, vers 1650°C, du SiO et vers 1800°C un mélange de vapeurs de SiO et de silicium. On peut éventuellement ajouter à ce mélange un excès de carbure de silicium afin de diluer les éléments réactifs et empêcher ainsi, lors de la fusion de la silice, qu'elle n'agglomère le mélange. Le taux de silice peut être en quantité telle qu'elle soit entièrement consommée.

Le mélange $SiC + SiO_2$ contient en principe de 50 à 75% en poids de SiC et de 50 à 25% en poids de $SiO_2$.

Avec un mélange de $SiC + Si + Al_2O_3$, on obtient des vapeurs de silicium et de SiO avec une nette prépondérance de vapeurs de silicium. Ce mélange contient en général de 8 à 10% en poids d'alumine, de 25 à 35% en poids de silicium et de 55 à 60% en poids de carbure de silicium.

Les réactions de siliciuration impliquées avec chacune des vapeurs siliciurantes sont les suivantes :

- Si + C --> SiC
- SiO + 2C --> SiC + CO

Cette siliciuration est effectuée en présence d'un gaz neutre tel que l'hélium, l'argon, le néon.

Les équations ci-dessus indiquent que la variation de volume est deux fois moindre avec le SiO qu'avec le silicium. Aussi, le revêtement externe est moins poreux lorsqu'on utilise un mélange de vapeurs de Si et de SiO comme réactif.

La durée de l'immersion du matériau densifié dans le mélange de poudres, à la température choisie, permet de fixer le nombre de nappes fibreuses transformées.

A titre d'exemple, le nombre de nappes de fibres transformé est de 2. Dans ce cas, on dispose de préférence les première, seconde et troisième nappes les plus externes de sorte que les fibres de la seconde nappe soient perpendiculaires à celles de la première et troisième nappes, la seconde nappe étant interposée entre les première et troisième nappes.

Il est toutefois possible d'orienter les fibres des seconde et troisième nappes parallèlement entre elles, mais perpendiculairement aux fibres de la première nappe. Ces différents arrangements permettent l'obtention de pavés dont la surface est sensiblement carrée.

Il est aussi possible d'orienter les fibres des première et seconde nappes parallèlement entre elles et les fibres de la troisième nappe perpendiculairement à celles des première et seconde nappes ou encore d'orienter les fibres des première, seconde et troisième nappes parallèlement entre elles, les pavés obtenus ayant alors en surface la forme d'un rectangle.

Les inventeurs ont constaté de façon surprenante que les fissures se formaient dans le revêtement externe de carbure et de carbonitrure selon des directions orthogonales à celles des ex-fibres et "coupaient" donc ces ex-fibres. En particulier, la transformation à chaud en carbure ou carbonitrure de plusieurs nappes de fibres de carbone, empilées de sorte que les fibres soient toutes parallèles entre elles puis densifiées par du carbone conduit nécessairement, lors du refroidissement de l'ensemble, à des fissures dans le carbure ou le carbonitrure orientées perpendiculairement à la direction des ex-fibres ; c'est donc la transformation chimique du carbone en carbure ou carbonitrure qui impose la forme et l'orientation des pavés. Ceci est dû au fait que les coefficients linéaires de dilatation des carbures et des carbonitrures sont supérieurs à celui du matériau carboné sous-jacent.

Par ailleurs, la nappe de fibres carbonées et densifiées, adjacente au revêtement externe de carbure ou de carbonitrure sert à empêcher le décollement de ce revêtement externe en créant de meilleures liaisons interlaminaires entre le matériau carboné sous-jacent et le carbure ou carbonitrure du revêtement externe.

Conformément à l'invention, les nappes de fibres internes de la pièce en matériau composite, c'est-à-dire les nappes sous-jacentes aux N nappes dont les fibres sont orientées selon deux directions perpendiculaires, peuvent être agencées selon les techniques connues. Ces nappes peuvent être agencées de sorte que la pièce présente des propriétés mécaniques quasi-isotropes ou spécifiques dans un même plan. En particulier, ces nappes internes peuvent être entrelacées ou non et agencées selon les techniques 2,5D ou 3D évo décrites respectivement dans les documents FR-A-2 610 951 et FR-A-2 612 950 déposés au nom du demandeur.

Le colmatage des fissures consiste tout d'abord en un dépôt de carbure par DCPV. Ce dépôt permet une diminution importante de la largeur de la fissure. Le carbure est avantageusement le même que celui du revêtement externe.

Pour améliorer la cicatrisation des fissures, on peut déposer ensuite une couche d'un oxyde réfractaire. Cet oxyde réfractaire peut par exemple être constitué de silice et/ou d'un verre borosilicaté ($SiO_2$-$B_2O_3$) comme décrit dans le document FR-A-2 611 198. On peut aussi utiliser, comme oxyde réfractaire, $ThO_2$, $ZrO_2$, $HfO_2$, $La_2O_3$, $Y_2O_3$ et $Al_2O_3$.

Afin d'éviter une réaction chimique entre le carbure du revêtement externe et la couche d'oxyde, on peut utiliser une couche intermédiaire de barrière de réaction. Comme couche intermédiaire, on peut utiliser l'une de celles décrites dans le document FR-A-2 635 773.

L'invention a aussi pour objet une pièce en matériau composite carboné, protégée contre l'oxydation obtenue par le procédé décrit précédemment.

D'autres caractéristiques et avantages de l'invention ressortiront mieux de la description qui va suivre, donnée à titre illustratif et non limitatif, en référence aux dessins annexés dans lesquels :

- la figure 1 représente schématiquement les différentes étapes de fabrication d'une pièce en matériau composite conformément à l'invention,
- la figure 2 illustre l'orientation des nappes de fibres de la préforme selon le procédé conforme à l'invention,
- les figures 3a à 3c illustrent l'étape de siliciuration du procédé conforme à l'invention,
- la figure 4 est une pièce en matériau composite protégée contre l'oxydation, conforme à l'invention,
- la figure 5 illustre le comportement, appelé tectonique par l'inventeur , du revêtement externe lorsque la pièce est soumise à des efforts de cisaillement, et
- la figure 6 montre l'influence d'une orientation des fibres non conforme à l'invention sur l'orientation des fissures et la désorganisation des pavés obtenus.

La description ci-après, en vue d'une simplification, se réfère à la siliciuration de deux nappes de fibres de surface. De plus, cette siliciuration concerne toute la surface externe de la préforme fibreuse et en particulier la surface supérieure et la surface inférieure de la préforme.

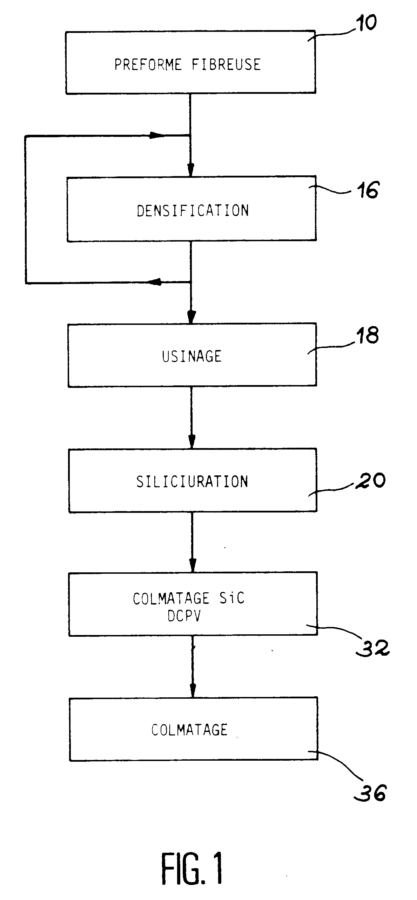

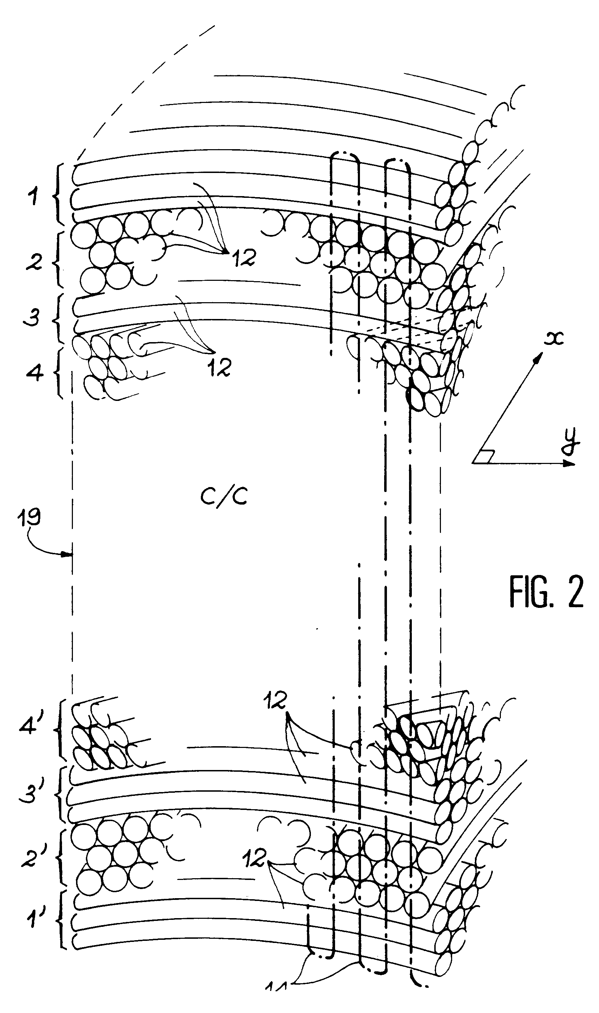

En se référant aux figures 1 et 2, la première étape du procédé conforme à l'invention consiste à former une préforme fibreuse 19 par superposition de nappes 1 à 4 et 1′ à 4′ de fibres 12 de carbone ; la préforme 19 fixe la forme finale de la pièce en matériau composite et le nombre de nappes superposées est en fonction de son utilisation précise. Cette étape est représentée par l'encadré 10 sous la figure 1.

Les fibres 12 de chaque nappe sont orientées (figure 2) parallèlement les unes aux autres et jointives. Elles se présentent généralement sous la forme de mèches de 3000, 6000 ou 1200 filaments environ, parallèles entre eux.

Sur la figure 2, les fibres 12 (ou plus exactement les mèches de fibres) de la nappe externe 1 de la surface supérieure de la préforme 19 sont orientées perpendiculairement aux fibres 12 de la nappe sous-jacente 2 puis parallèlement aux fibres 12 de la nappe 3 sous-jacente à la nappe 2. De même, les fibres 12 de la nappe externe 1′ de la surface inférieure de la préforme sont orientées perpendiculairement à celles des fibres de la nappe 2′ sous-jacentes et parallèlement à celles des fibres de la nappe 3′.

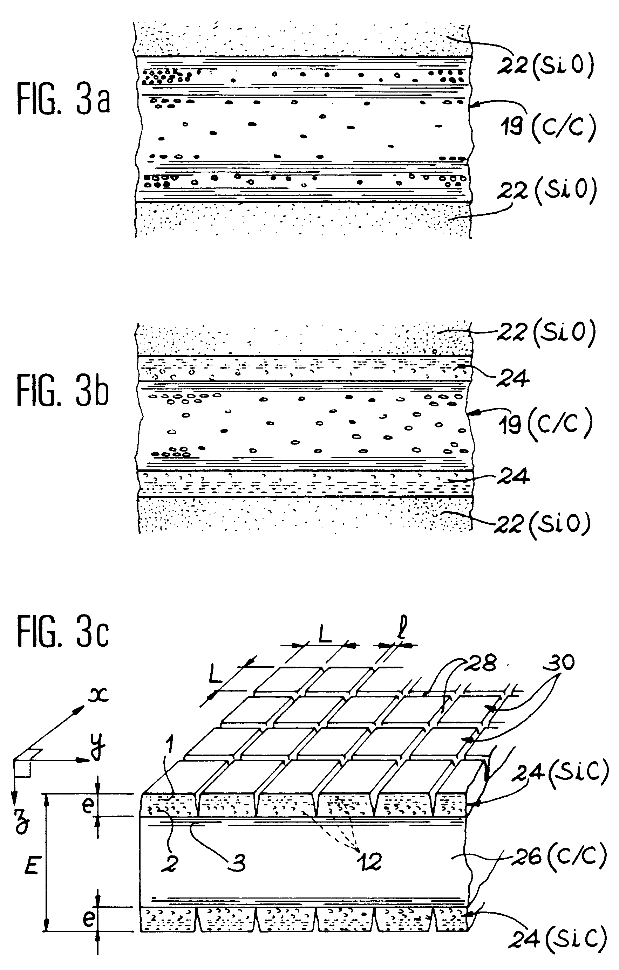

Cette orientation croisée à 90° des fibres des nappes les plus externes de la préforme permet d'obtenir un réseau organisé de fissures dans le revêtement externe comme on le verra ultérieurement en référence aux figures 3a à 3c.

D'autres arrangements que celui représenté des nappes externes à siliciurer de la préforme fibreuse peuvent être envisagés. En particulier, les orientations suivantes peuvent être utilisées (0/90/0/...) ou (90/0/0/...) ou (0/0/90/...) ou encore (0/0/0/...).

Sur la figure 2, la superposition de nappes de fibres correspond à une architecture du type 3D évo mais bien entendu, l'invention est d'application beaucoup plus générale, comme on l'a vu précédemment. En particulier, le procédé de l'invention s'applique aussi à des architectures 2,5D comme décrit dans le document FR-A-2 610 951.

Sur la figure 2, les fibres des nappes 4 et 4′ au contact des nappes respectivement 3 et 3′ sont orientées à 45° des fibres des nappes 3 et 3′ respectivement.

A titre d'exemple, une pièce courante en 3D évo à quasi-isotropie planaire, conforme à l'invention, peut avoir l'empilement de nappes suivant :

(0/90/0/45/-45/90/0/45/45/90)sym.

Dans cette formulation sym indique que l'empilement est symétrique par rapport au milieu de la pièce et les chiffres représentent l'orientation des fibres par rapport à une direction repère. Les chiffres 0 et 90 indiquent respectivement une orientation parallèle et perpendiculaire à cette direction repère et 45° et -45° indiquent respectivement une orientation à 45° et -45° de cette direction repère.

Avec cet empilement, on obtient une isotropie des propriétés mécaniques dans le plan, les nappes de fibres travaillant selon quatre directions à 45° les unes des autres. Une architecture avec quatre directions proches de 45° les unes des autres en tout point de la structure peut par exemple constituer une partie courante du nez d'une navette spatiale.

Après superposition des différentes nappes de fibres conformément à l'invention, on effectue un piquage 14 des différentes nappes assurant l'assemblage des nappes. Ce piquage 14 est réalisé avec des fibres de carbone et constitue la troisième orientation des fibres dans l'espace.

Pour de plus amples détails sur ce piquage, on peut se référer au document FR-A-2 612 950.

L'étape suivante du procédé concerne la densification de la préforme fibreuse comme indiqué en 16 sur la figure 1.

Cette densification consiste à combler les vides entre les fibres 12 et former ainsi une matrice de carbone éventuellement dopée avec 2 à 10% en poids de SiC. Elle consiste en plusieurs cycles d'imprégnation d'un précurseur de carbone et éventuellement de SiC, de polymérisation, de pyrolyse et de traitement thermique. Le précurseur du carbone peut être une résine phénolique du type résol ou une résine furannique. Le dopage par SiC peut être assuré par greffage de fonctions silicones sur la résine phénolique.

La polymérisation est effectuée à pression atmosphérique jusqu'à une température de 200°C et est suivie d'un écroutage pour enlever l'excès de résine. La pyrolyse est effectuée en milieu neutre vers 800°C environ afin de transformer le polymère réticulé en coke dur. Le traitement thermique est effectué entre 1200 et 1800°C.

Le nombre de cycles successifs de ces opérations est généralement de 5.

Après densification, on effectue un usinage symbolisé en 18 sur la figure 1, notamment des bordures et des trous destinés à l'assemblage de la pièce mécanique finie à d'autres mécaniques en vue de réaliser le véhicule spatial.

L'étape suivante du procédé, symbolisé en 20 sur la figure 1, concerne la siliciuration de la préforme 19 densifiée en vue de former le revêtement externe de protection anti-oxydation. Cette étape est illustrée de façon plus détaillée sur les figures 3a à 3c.

La siliciuration consiste à immerger (figures 3a et 3b) la préforme 19 densifiée dans un mélange de poudres 22 contenant, en poids, 10% d'Al$_2$O$_3$, 30% de Si et 60% de SiC. Ces poudres ont une granulométrie de 30 à 60 $\mu$m et une masse volumique apparente après tassage de 1000Kg/m$^3$. La siliciuration est réalisée dans un récipient en graphite. Ce récipient chargé subit alors un traitement thermique à 1700°C sous atmosphère d'argon.

On forme ainsi le revêtement externe 24 de SiC sur toute la surface externe de la préforme 19 densifiée. Le temps de siliciuration est fonction de l'épaisseur recherchée pour le revêtement 24.

Après avoir enlevé la poudre de siliciuration la pièce est nettoyée et la structure obtenue est celle représentée sur la figure 3c.

Si e représente l'épaisseur du revêtement 24 et E l'épaisseur totale de la pièce siliciurée, on doit avoir 2e/E≤1/3 afin que la pièce finale ait une bonne tenue mécanique ; cette dernière est due aux fibres 12 et à la matrice 26 carbonée.

A titre d'exemple, on peut siliciurer une préforme fibreuse densifiée du type carbone/carbone de 4mm d'épaisseur au total, sur 0,4mm d'épaisseur de chaque côté, chaque nappe de fibres ayant une épaisseur de 0,2mm.

La siliciuration est une réaction thermochimique transformant localement le carbone des fibres et celui de la matrice en carbure de silicium à partir des surfaces externes de la pièce, et ceci, jusqu'à une épaisseur optimisée vis-à-vis de la diffusion des gaz oxydants. Les réactions chimiques mises en jeu sont données précédemment.

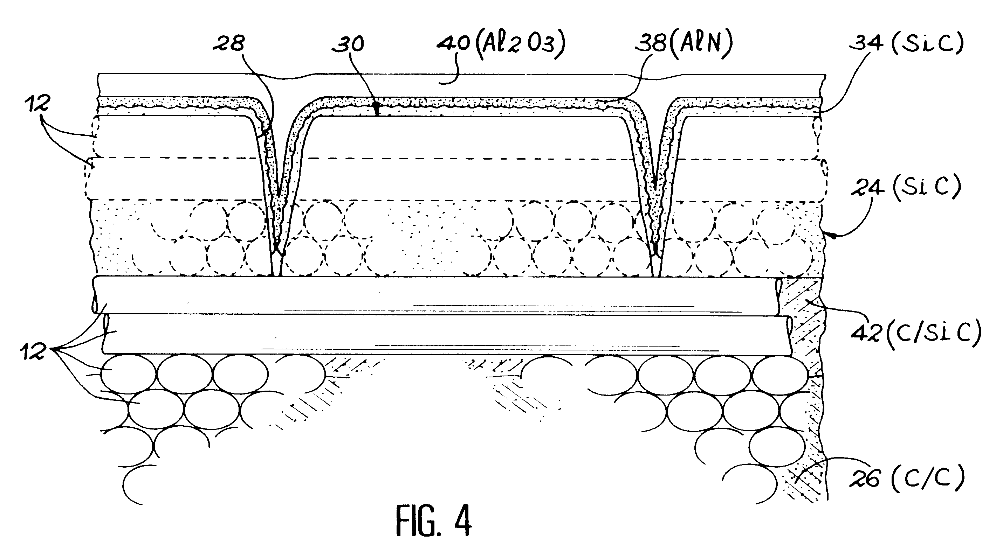

Au refroidissement, l'incompatibilité dilatométrique entre le carbone des fibres et de la matrice et le carbure de silicium du revêtement externe 24 crée des fissures 28 traversant la couche siliciurée 24 (figure 4) parallèlement à son épaisseur (axe z) et pénétrant légèrement dans la matrice carbonée 26. Ces fissures débouchent vers l'extérieur.

La fissuration du revêtement externe, représentée sur les figures 3c et 4 à 6, est celle que l'on a à température ambiante (20 à 25°C).

Grâce à l'orientation des fibres des nappes externes 1 et 2 de la préforme selon deux directions perpendiculaires, x et y, les fissures 28 s'orientent selon ces deux directions. On obtient ainsi des pavés 30 de SiC de forme parallélépipédique et présentant dans ce cas particulier la forme d'un carré dans le plan xy, de côté L.

Ces pavés sont indépendants les uns des autres et adhérent parfaitement bien à la matrice carbonée 26.

Conformément à l'invention, les fissures débouchantes 28 de la couche siliciurée 24 gardent la mémoire de l'orientation des ex-fibres de carbone 12 transformées en SiC. Ainsi, la couche de SiC se fractionne régulièrement dans la direction des ex-fibres de carbone, au refroidissement du traitement de siliciuration, avec un espacement l de dimensions millimétriques.

A l'aide d'un microscope optique, il est possible de voir l'orientation des fibres à l'origine du réseau de fissures.

Plus on siliciure en profondeur, plus les fissures 28 sont ouvertes et plus la surface supérieure des pavés est grande. La surface L$^2$ des pavés dépend des épaisseurs relatives de la partie 26 de carbone et de l'épaisseur e des couches siliciurées ainsi que des propriétés intrinsèques du matériau telles que les coefficients de dilatation, son module et ainsi que des contributions thermochimiques.

En résumé, la largeur l des fissures et la largeur L des pavés croissent selon une fonction monotone avec l'épaisseur e de siliciuration, toute chose étant égale par ailleurs.

En outre, l à température ambiante, dépend de la température d'élaboration de la couche 24 de siliciure et en particulier de la différence de températures entre la température maximum d'élaboration et la température ambiante.

Les fissures de la couche de SiC se referment lorsque la température augmente et les pavés deviennent jointifs pour une température égale à celle de l'élaboration du carbure.

En particulier, ces fissures tendent à se refermer lors de l'utilisation des pièces à haute température. Pour une fabrication à 1700°C du revêtement siliciuré, une utilisation de la pièce mécanique à 1700°C conduit à une fermeture complète des fissures.

A titre d'exemple, pour une élaboration à 1700°C, l = 0$\mu$m à 1700°C, l = 4$\mu$m à 1000°C et l = 10$\mu$m à 20°C.

Par ailleurs, le comportement dilatométrique des fibres 12 de carbone, de nature anisotrope conduit à une microfissuration de la matrice 26. En effet, le coefficient de dilatation d'une fibre dans le sens de sa longueur est faible, voire négatif, tandis que radialement il est relativement élevé. Aussi, le précurseur de la matrice carbonée, fragile, ne peut pas toujours s'accommoder devant cette anisotropie et s'associer au changement de volume résultant des traitements thermiques de la densification.

Les microfissures de la matrice diffèrent selon la position de la matrice dans la pièce en matériau composite et les orientations des fibres les unes par rapport aux autres. Aussi, les traitements thermiques d'élaboration de la matrice et le revêtement éventuel des fibres de carbone par un matériau approprié dit d'ensimage permettent l'obtention d'un matériau composite carbone-carbone très résistant. Ceci résulte de liaisons fibres/matrice qui, pour de fortes contraintes, vont permettre des microdéplacements rectilignes ou angulaires et, petit à petit, le transfert des charges sur les fibres voisines par les ruptures successives de ces liaisons.

L'enduction des fibres par le produit d'ensimage est réalisée lors de la fabrication des nappes de fibres ou sur les fibres elles-mêmes avant tissage.

Les produits d'ensimage et les méthodes d'enduction utilisables dans l'invention sont ceux de l'art antérieur.

Lors de l'utilisation de la pièce mécanique, les fissures du revêtement externe induisent une pénétration privilégiée de l'oxygène dans la matrice carbonée 26 ; aussi est-il nécessaire de les colmater.

La première étape de cicatrisation des fissures symbolisée en 32 sur la figure 1 consiste à déposer une couche 34 de SiC (figure 4) par décomposition chimique en phase vapeur.

A cet effet, on dispose la pièce dans un four isotherme maintenu à environ 1000°C où circule un mélange de chlorosilane $(CH_3)_nSiCl_{(4-n)}$ avec $0 \leq n \leq 4$, associé à un hydrocarbure et en particulier un alcane (méthane, éthane, propane) et/ou à de l'hydrogène. Par exemple, on utilise un mélange de trichlorométhylsilane et d'hydrogène dans un rapport $(H_2)/(CH_3SiCl_3) = 4$ à 12.

Cette étape dure environ deux fois 2 heures : 2 heures pour la face supérieure de la pièce et deux autres heures pour la face inférieure.

Ce dépôt 34 de SiC, comme représenté sur la figure 4, permet une réduction de la largeur l des fissures 28 sans pour autant les fermer. En effet, le dépôt de SiC 34 se faisant à haute température, leur espacement se trouve déjà réduit par rapport à celui de la température ambiante, ce qui ne permet pas une pénétration du SiC jusqu'au fond des fissures.

Cette réduction de l'ouverture des fissures limite en grande partie la pénétration de l'oxygène dans la matrice carbonée lors de l'utilisation de la pièce.

On effectue alors une seconde étape 36 de colmatage des fissures.

Cette cicatrisation peut consister, comme représenté sur la figure 4, en un dépôt d'une couche 38 de nitrure d'aluminium sur toute la surface externe (inférieure ou supérieure) de la pièce, suivi d'un dépôt d'une couche 40 d'alumine.

La couche de nitrure d'aluminium sert de barrière de réaction entre le SiC 34 et l'alumine 40. La couche d'AlN peut être réalisée avec un mélange de chlorure d'aluminium, d'hydrogène et d'ammoniac, sous balayage d'un gaz neutre (argon en particulier). Cette couche d'AlN est déposée par DCPV à environ 950°C. L'épaisseur moyenne de la couche est de 1,5 µm environ.

La couche d'alumine 40 est déposée par DCPV à environ 950°C avec un mélange d'AlCl3, d'H2O et de CO2. La couche 40 a une épaisseur de 5 µm environ.

Il est possible de remplacer la couche de nitrure d'aluminium par une couche de nitrure d'hafnium.

La pièce ainsi obtenue peut être utilisée en ambiance particulièrement sévère et en particulier pour constituer le nez de navettes spatiales soumises à des températures de l'ordre de 1800°C lors de la rentrée dans l'atmosphère.

Pour d'autres utilisations, on peut remplacer les couches d'AlN et d'alumine respectivement par une couche de silice et d'un verre borosilicaté comme décrit dans le document FR-A-2 611 198.

Avec ce type de protection, la pièce obtenue peut être utilisée pour constituer les bords d'attaque d'une navette spatiale.

Comme représenté sur la figure 4, la siliciuration du matériau carbone-carbone conduit non seulement à la formation des pavés 24 de SiC, mais aussi à la formation d'une sous-couche 42 de carbone et de SiC assurant une bonne adhérence du revêtement 24 sur le matériau carbone-carbone.

Une étude du comportement mécanique de la protection anti-oxydation (PAO) ainsi obtenue (couche de SiC plus cicatrisation des fissures) fait apparaître un comportement mécanique du type tectonique.

Du point de vue mécanique, la couche de SiC de siliciuration relativement épaisse (quelques dizièmes de millimètres) par rapport à l'épaisseur de cicatrisation impose sa loi tandis que l'ensemble des différents dépôts de cicatrisation se trouve sur un lit mouvant de pavés. La participation mécanique de cette cicatrisation est de second ordre compte tenu de sa faible épaisseur (<10 µm).

Les directions principales du réseau de fissures étant orthogonales, le matériau équivalent de la protection anti-oxydation est naturellement considéré comme orthotrope. Les axes d'orthotropie de la PAO coïncident avec ceux du matériau carbone-carbone sous-jacent.

On donne ci-après la description tectonique de la PAO selon ses axes d'orthotropie.

Compression

Les efforts mécaniques de compression, transmis à la PAO, ont tendance à refermer les fissures et les pavés se poussent progressivement les uns contre les autres. Cet empilement progressif ressemble à un ressort qui serait situé entre deux pavés. Le module de compression équivalent de la PAO est moyen car il dépend du module élevé du pavé de SiC et de la raideur faible du "ressort" inter-pavé.

Lorsque les efforts augmentent, la cohésion des pavés, près des deux surfaces siliciurées, améliore la stabilité du sandwich SiC/C-C/SiC. La contrainte à la rupture équivalente de la PAO, en compression, est élevée.

Pour les carbones-carbones inoxydables de faible épaisseur, la PAO améliore nettement les caractéristiques de compression du sandwich.

Traction

Les pavés ont tendance à s'ouvrir et on ne peut plus compter sur le module du pavé de SiC. Une traction selon une direction principale se combine à une compression transverse, par effet Poisson, et une faible participation du ressort est envisageable. Par un flux d'entraînement en cisaillement interlaminaire de la PAO vers le carbone-carbone, la raideur locale de ce dernier sous un pavé peut augmenter, augmentant un peu, par là-même, la raideur globale.

Pratiquement, la participation mécanique de la PAO est négligeable en traction.

Cisaillement plan

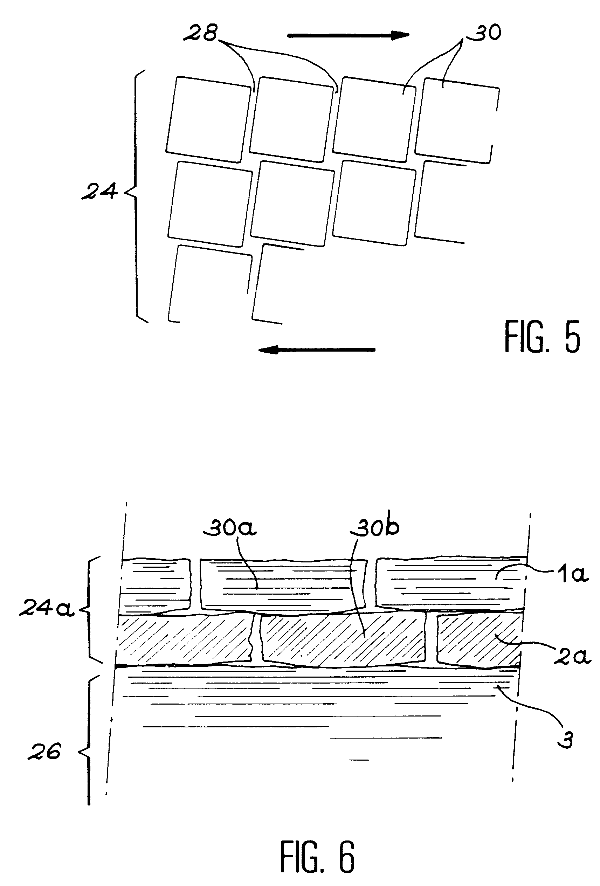

La participation de la PAO est intermédiaire entre les deux extrêmes que sont la traction et la compression. On retrouve l'image des pavés, auto-bloquants par rotation, qui s'adossent les uns contre les autres, comme représenté sur la figure 5.

Le module et la contrainte de cisaillement de la PAO sont donc à prendre en compte car ils améliorent les caractéristiques du sandwich carbone-carbone inoxydable de faible épaisseur.

Si au lieu d'orienter les fibres des nappes les plus externes selon deux directions perpendiculaires (figure 2), on avait orienté, comme représenté sur la figure 6, les fibres 12 de la nappe supérieure 1a et celles de la nappe sous-jacente 2a selon deux directions formant un angle de 45°, on aurait obtenu un endommagement du revêtement externe 24a correspondant lors d'une quelconque sollicitation mécanique de la pièce protégée.

En effet, cette orientation à 45° en surface des fibres conduit à la formation de deux sortes de pavés 30a et 30b, une sorte par nappe de fibres, et à des fissures entre ces pavés totalement décalées d'une nappe à l'autre. La mise en sollicitation mécanique provoque alors un délaminage de la nappe supérieure 1a de fibres siliciurées entraînant avec lui les couches de cicatrisation des fissures.

La perte de la majeure partie de la PAO conduit à une oxydation importante de la pièce carbonée lors de son utilisation à haute température.

Les microfissures de la matrice carbone et les fissures organisées de la couche de SiC de la PAO sont des éléments fondamentaux pour la très bonne tenue mécanique en température des pièces en matériau composite ; vis-à-vis des matériaux composites carbonés, ces microfissures et fissures bien gérées sont un gage de leur comportement non fragile. La compréhension du comportement mécanique de la partie carbone-carbone et de la tectonique de sa PAO a permis, selon l'invention, de contribuer à l'amélioration des pièces en matériau composite et notamment à leur résistance à l'oxydation.

## Revendications

1. Procédé de fabrication d'une pièce en matériau composite carboné, protégée contre l'oxydation, consistant à :

   (a) - former une préforme fibreuse (19) de la pièce en superposant des nappes (1 à 4 et 1′ à 4′) de fibres carbonées (12), les fibres (12) de chaque nappe étant parallèles entre elles et les N nappes les plus externes de cette superposition, avec N entier ≥2, étant agencées de sorte que leurs fibres soient orientées uniquement selon une première ou une seconde direction (x, y), la première et la seconde directions étant perpendiculaires entre elles et contenues dans un même plan,

   (b) - densifier (16) la préforme par un matériau carboné de densification (26),

   (c) - former un revêtement externe (24) de carbure ou de carbonitrure réfractaire stable à la surface de la préforme densifiée pour assurer une protection contre l'oxydation du matériau et des fibres carbonés sous-jacents, ce revêtement étant formé en faisant réagir chimiquement, à une température supérieure à la température ambiante, les N-1 nappes (1, 2, 1′, 2′) densifiées les plus externes de la préforme (19) densifiée avec au moins un composé chimique (22) précurseur dudit carbure ou carbonitrure,

   (d) - laisser refroidir l'ensemble obtenu en (c) pour former dans le revêtement externe des fissures (28) dans le sens (z) de l'épaisseur (e) du revêtement et débouchant vers l'extérieur de la pièce, ces fissures étant orientées selon les première et seconde directions et définissant entre elles des pavés (30) parallélépipédiques dudit carbure ou carbonitrure, et

   (e) - colmater les fissures.

2. Procédé selon la revendication 1, caractérisé en ce que l'épaisseur de la couche de carbure ou de carbonitrure est inférieure à l'épaisseur de matériau et de fibres carbonés sous-jacents non transformés en carbure ou carbonitrure.

3. Procédé selon la revendication 1 ou 2, caractérisé en ce que les nappes de fibres situées sous les N nappes les plus externes sont agencées de sorte que la pièce présente des propriétés mécaniques quasi-isotropes ou spécifiques selon ledit plan.

4. Procédé selon l'une quelconque des revendications 1 à 3, caractérisé en ce que le composé chimique est du silicium ou un composé du silicium et le revêtement externe (24) du carbure de silicium.

5. Procédé selon l'une quelconque des revendications 1 à 4, caractérisé en ce que les fibres (12) sont des fibres de carbone.

6. Procédé selon l'une quelconque des revendications 1 à 5, caractérisé en ce que le matériau de densification (26) est essentiellement du carbone.

7. Procédé selon l'une quelconque des revendications 1 à 6, caractérisé en ce que le matériau de densification est du carbone dopé par un ralentisseur d'oxydation.

8. Procédé selon l'une quelconque des revendications 1 à 7, caractérisé en ce que N vaut 3.

9. Procédé selon la revendication 8, caractérisé en ce que l'on dispose les première, seconde et troisième nappes (1, 2, 3, 1′, 2′, 3′) les plus externes de sorte que les fibres de la seconde nappe (2, 2′) soient perpendiculaires à celles de la première (1, 1′) et troisième (3, 3′) nappes, la seconde nappe étant interposée entre les première et troisième nappes.

10. Procédé selon l'une quelconque des revendications précédentes, caractérisé en ce que l'étape (e) comporte une étape de dépôt chimique en phase vapeur d'un carbure ou carbonitrure (34) réfractaire dans les fissures (28).

11. Procédé selon l'une quelconque des revendications précédentes, caractérisé en ce que l'étape (e) comporte une étape de dépôt d'une couche d'un oxyde réfractaire (40).

12. Procédé selon l'une quelconque des revendications 1 à 11, caractérisé en ce que l'on enduit les fibres de chaque nappe d'un produit d'ensimage avant la superposition des nappes.

13. Pièce en matériau carboné, protégée contre l'oxydation comportant des nappes de fibres carbonées (1-4, 1′-4′) superposées, noyées dans une matrice carbonée (26), les fibres de chaque nappe étant parallèles entre elles, et un revêtement externe (24) de carbure ou carbonitrure réfractaire recouvrant toutes les surfaces externes de la pièce, ce revêtement comportant des fissures (28) dans le sens (z) de son épaisseur et débouchant vers l'extérieur, ces fissures étant colmatées et orientées uniquement selon deux directions perpendiculaires (x, y), contenues dans le plan du revêtement et définissant entre elles des pavés (30) parallélépipédiques, les fibres (12) de la nappe (3, 3′) au contact du revêtement externe étant orientées selon l'une des deux directions.

## Claims

1. Process for the production of a carbon-containing composite material part, which is protected against oxidation, comprising:

    (a) forming a fibrous preform (19) of the part by superimposing layers (1 to 4 and 1' to 4') of carbon-containing fibres (12), the fibres (12) of each layer being parallel to one another and the N outermost layers of said superimposition, with N being an integral $\geq$ 2, being arranged in such a way that their fibres are only oriented in accordance with a first or a second direction (x, y), the first and second directions being perpendicular to one another and contained in a same plane,

    (b) densifying (16) the preforms by a carbon-containing densification material (26),

    (c) forming an outer stable refractory carbonitride or carbide coating (24) on the surface of the densified preform in order to give protection against oxidation of the material and the underlying carbon-containing fibres, said coating being formed by chemically reacting at, at a temperature above ambient temperature, the N-1 outermost densified layers (1, 2, 1', 2') of the densified preform (19) with at least one chemical compound (22) constituting a precursor of said carbide or carbonitride,

    (d) allowing the assembly obtained in (c) to cool in order to form in the outer coating cracks (28) in the thickness (e) direction (z) of said coating and issuing towards the outside of the part, these cracks being oriented in first and second directions and defining between them parallelepipedic blocks (30) of said carbide or carbonitride and

    (e) filling the cracks.

2. Process according to claim 1, characterized in that the thickness of the carbide or carbonitride layer is less than the thickness of material and underlying carbon-containing fibres not transformed into carbide or carbonitride.

3. Process according to claim 1 or 2, characterized in that the layers of fibres located below the outermost N layers are arranged in such a way that the part has quasi-isotropic or specific mechanical properties in accordance with the said plane.

4. Process according to any one of the claims 1 to 3, characterized in that the chemical compound is silicon or a compound of silicon and the outer coating (24) is silicon carbide.

5. Process according to any one of the claims 1 to 4, characterized in that the fibres (12) are carbon fibres.

6. Process according to any one of the claims 1 to 5, characterized in that the densification material (26) is essentially carbon.

7. Process according to any one of the claims 1 to 6, characterized in that the densification material is carbon doped by an oxidation retardant.

8. Process according to any one of the claims 1 to 7, characterized in that N = 3.

9. Process according to claim 8, characterized in that the outermost first, second and third layers (1, 2, 3, 1', 2', 3') are positioned in such a way that the fibres of the second layer (2, 2') are perpendicular to those of the first (1, 1') and third (3, 3') layers, the second layer being interposed between the first and third layers.

10. Process according to any one of the preceding claims, characterized in that stage (e) involves a chemical vapour phase deposition stage with respect to a refractory carbide or carbonitride (34) in the cracks (28).

11. Process according to any one of the preceding claims, characterized in that stage (e) has a stage of depositing a layer of a refractory oxide (40).

12. Process according to any one of the claims 1 to 11, characterized in that the fibres of each layer are coated with a sizing product prior to the superimposing of the layers.

13. Carbon-containing material part protected against oxidation having layers of superimposed carbon-containing fibres (1-4, 1'-4'), embedded in a carbon-containing matrix (26), the fibres of each layer being parallel to one another, and an outer refractory carbide or carbonitride coating (24) covering all the outer surfaces of the part, said coating having cracks (28) in the direction (z) of its thickness and issuing towards the outside, said cracks being filled and oriented solely in two perpendicular directions (x, y), contained in the plane of the coating and defining between them parallelepipedic blocks (30), the fibres (12) of the layer (3, 3') in contact with the outer coating being oriented in accordance with one of the two directions.

**Patentansprüche**

1. Verfahren zur Herstellung eines aus kohlenstoffhaltigem Material bestehenden und gegen Oxydation geschützten Teils, und zwar ein Verfahren, bei dem

    (a) -ein faserartiger Vorpreßling (19) des Teiles geformt wird, indem die Lagen (1 bis 4 und 1' bis 4') der Kohlenstoff-Fasern (12) übereinandergelegt werden, wobei die Fasern (12) jeder einzelnen Schicht untereinander parallel verlaufen und die äußersten der N Schichten dieser Überlagerung (mit N gesamt ≥ 2) so angeordnet sind, daß ihre Fasern ausschließlich entlang einer ersten oder einer zweiten Richtung (x, y) ausgerichtet sind, wobei die erste und die zweite Richtung senkrecht zueinander stehen und in der gleichen Ebene liegen,

    (b) -der Vorpreßling mit einem kohlenstoffhaltigen Verdichtungsmaterial (26) verdichtet (16) wird,

    (c) -eine Außenummantelung (24) aus feuerfestem Karbid bzw. Karbonitrat gebildet wird, die an der Oberfläche des verdichteten Vorpreßlings fest angebracht ist, um einen Oxydationsschutz des Materials und der darunterliegenden Kohlenstoff-Fasern zu gewährleisten, wobei diese Ummantelung so geformt ist, daß sie bei einer höheren Temperatur als der Umgebungstemperatur eine chemische Reaktion zwischen den äußersten, verdichteten Gewebeschichten N-1 (1, 2, 1', 2') des verdichteten Vorpreßlings (19) mit mindestens einem chemischen Vorprodukt (22) des genannten Karbid bzw. Karbonitrat auslöst,

    (d) die unter (c) gewonnene Verbindung so weit abgekühlt wird, daß sich in der Außenummantelung Risse (28) in Richtung (z) der Dicke (e) der Ummantelung bilden und sich zum Äußeren des Teils hin öffnen, wobei diese Risse entsprechend der ersten und zweiten Richtung ausgerichtet sind und wobei sich zwischen diesen Rissen parallele, flache Oberflächenbereiche (30) des genannten Karbid bzw. Karbonitrat bilden, und (e) die Risse ausgefüllt werden.

2. Verfahren nach Anspruch 1, dadurch gekennzeichnet, daß die Dicke der Karbid- bzw. Karbonitratschicht kleiner ist als die Dicke des Materials und der darunterliegenden, nicht in Karbid bzw. Karbonitrat umgewandelten Kohlenstoff-Fasern.

3. Verfahren nach Anspruch 1 oder 2, dadurch gekennzeichnet, daß die unter den N äußeren Gewebeschichten liegenden Faserschichten so angeordnet sind, daß das Teil alle mechanischen, quasiisotropen Eigenschaften bzw. alle für die genannte Anordnung spezifischen Eigenschaften aufweist.

4. Verfahren nach einem der Ansprüche 1 bis 3, dadurch gekennzeichnet, daß die chemische Verbindung aus Silizium bzw. einer Siliziumverbindung und die äußere Ummantelung (24) aus Siliziumkarbid besteht.

5. Verfahren nach einem der Ansprüche 1 bis 4, dadurch gekennzeichnet, daß die Fasern (12) Kohlenstoff-Fasern sind.

6. Verfahren nach einem der Ansprüche 1 bis 5, dadurch gekennzeichnet, daß das Verdichtungsmaterial (26) im wesentlichen aus Kohlenstoff besteht.

7. Verfahren nach einem der Ansprüche 1 bis 6, dadurch gekennzeichnet, daß das Verdichtungsmaterial aus Kohlenstoff mit einem Oxydationshemmer besteht.

8. Verfahren nach einem der Ansprüche 1 bis 7, dadurch gekennzeichnet, daß N gleich 3 ist.

9. Verfahren nach Anspruch 8, dadurch gekennzeichnet, daß die erste, zweite und dritte der äußeren Gewebeschichten (1, 2, 3, 1', 2', 3') so angeordnet sind, daß die Fasern der zweiten Gewebeschicht (2, 2') senkrecht zur ersten (1, 1') und dritten Gewebeschicht (3, 3') liegen und sich die zweite Schicht zwischen der ersten und dritten Schicht befindet.

10. Verfahren nach einem der zuvor genannten Ansprüche, dadurch gekennzeichnet, daß der Schritt (e) eine Phase der chemischen Ablagerung in den Rissen (28) während des Verdampfens eines Karbid bzw. Karbonitrat (34) beinhaltet.

11. Verfahren nach einem der zuvor genannten Ansprüche, dadurch gekennzeichnet, daß beim Schritt (e) eine Schicht aus feuerfestem Oxid (40) gebildet wird.

12. Verfahren nach einem der Ansprüche 1 bis 11, dadurch gekennzeichnet, daß die Fasern einer jeden Gewebeschicht einer Schmälzmasse vor der Überlagerung der Gewebeschichten bestrichen wird.

13. Ein aus kohlenstoffhaltigem Material bestehendes und gegen Oxydation geschütztes Teil, das übereinanderliegende Faserschichten aus Kohlenstoff (1-4, 1'-4') umfaßt und in einer kohlenstoffhaltigen Grundmasse (26) eingebettet ist, wobei die Fasern einer jeden Schicht untereinander parallel verlaufen; ferner eine Außenummantelung (24) aus feuerfestem Karbid bzw. Karbonitrat, die die gesamte Außenfläche des Teils bedeckt, wobei diese Ummantelung Risse (28) enthält, die in Richtung (z) ihrer Dicke verlaufen und sich nach außen hin öffnen; wobei diese Risse abkühlen und ausschließlich nach den beiden in der Ummantelungsebene vorhandenen, senkrecht stehenden Richtungen (x, y) ausgerichtet werden und sich zwischen diesen Rissen flache, parallele Oberflächenbereiche (30) bilden und die Fasern (12) der Gewebeschicht (3, 3') bei Kontakt mit der Außenummantelung nach einer der beiden Richtungen ausgerichtet werden.

```
                    ┌─────────────────────────┐   ⟋10
                    │    PREFORME FIBREUSE     │╱
                    └─────────────────────────┘
                                 │
        ┌────────────────────────┼──►
        │                        ▼
        │           ┌─────────────────────────┐   ⟋16
        │           │      DENSIFICATION       │╱
        │           └─────────────────────────┘
        │                        │
        └───────────────────────◄┘
                                 │
                                 ▼
                    ┌─────────────────────────┐   ⟋18
                    │         USINAGE          │╱
                    └─────────────────────────┘
                                 │
                                 ▼
                    ┌─────────────────────────┐
                    │       SILICIURATION      │╱  ⟋20
                    └─────────────────────────┘
                                 │
                                 ▼
                    ┌─────────────────────────┐
                    │     COLMATAGE SiC        │
                    │         DCPV             │╱
                    └─────────────────────────┘
                                 │              ⟍32
                                 ▼
                    ┌─────────────────────────┐
                    │        COLMATAGE         │
                    └─────────────────────────┘
                                                ⟍36
```

# FIG. 1

FIG. 2

FIG. 3a

22 (SiO)

19 (C/C)

22 (SiO)

FIG. 3b

22 (SiO)

24

19 (C/C)

24

22 (SiO)

FIG. 3c

$L$

$l$

$L$

$L$

28

30

$x$

$y$

$z$

1

24 (SiC)

$e$

2

3

12

26 (C/C)

$E$

$e$

24 (SiC)

FIG. 4

EP 0 482 994 B1

FIG. 5

FIG. 6